# FASCICULE DE BREVET EUROPEEN

(11) **EP 3 252 425 B1**
(45) Date de publication et mention de la délivrance du brevet: **12.12.2018**
(21) Numéro de dépôt: 17172575.7
(22) Date de dépôt: 23.05.2017
(51) Int. Cl.: G01B 5/14, E04G 23/00, G01B 5/30

(54) **DISPOSITIF DE MESURE UNIDIRECTIONNELLE DE LA VARIATION DE LONGUEUR ENTRE DEUX POINTS D'UNE SURFACE**
VORRICHTUNG ZUM UNIDIREKTIONALEN MESSEN DER LÄNGENVERÄNDERUNG ZWISCHEN ZWEI PUNKTEN EINER OBERFLÄCHE
DEVICE FOR UNIDIRECTIONAL MEASUREMENT OF THE CHANGE IN LENGTH BETWEEN TWO POINTS OF A SURFACE

(30) Priorité: 31.05.2016 FR 1654940
(43) Date de publication de la demande: 06.12.2017
(73) Titulaire: PRYL, 74210 Giez (FR)
(72) Inventeur: BEAUFILS, Christian, 74210 GIEZ (FR)
(74) Mandataire: Vidon Brevets & Stratégie

(56) Documents cités:
- WO-A2-2009/028971
- DE-A1- 4 129 032
- DE-U1- 9 400 755
- FR-A1- 2 784 178
- FR-A1- 2 884 911
- GB-A- 2 110 372

## Description

### 1. Domaine de l'invention

Le domaine de l'invention est celui de la mesure unidirectionnelle de la variation de longueur entre un point A et un point B d'au moins une surface.

### 2. Art Antérieur

Des dispositifs, tel que celui décrit dans la présente invention, sont notamment utilisés dans le domaine du bâtiment, pour pouvoir contrôler la stabilité d'une façade d'un bâtiment, en mesurer l'évolution, et prévenir ainsi un éventuel danger. Ces dispositifs sont généralement fixés sur des murs pour mesurer l'évolution d'une fissure par exemple.

Une fissure se caractérise par un plan de fissure et un front de fissure. Elle peut évoluer selon trois modes qui peuvent éventuellement se combiner : un mode dit d'ouverture dans lequel le déplacement est perpendiculaire au plan de la fissure, un mode dit de glissement plan dans lequel le déplacement est parallèle au plan de la fissure et normal au front de fissure et un mode dit de glissement anti-plan dans lequel le déplacement est parallèle au plan de la fissure et au front de fissure.

Il est connu de l'art antérieur, notamment par la demande de brevet déposée par la demanderesse publiée sous le numéro FR 2 274 021, un dispositif pour mesurer l'évolution d'une fissure comportant une réglette munie de graduations coulissant dans un support muni d'un vernier, la réglette et le vernier pouvant être fixés chacun à une partie respective du mur de part et d'autre de la fissure à l'aide d'adhésifs comme moyens de fixation. Ce dispositif est particulièrement adapté pour mesurer l'évolution d'une fissure selon un seul mode d'évolution d'une fissure, en particulier selon un mode d'ouverture. Un dispositif similaire dans lequel les moyens de fixation ont été remplacés par des chevilles à collerette associées à des vis et dans lequel la réglette et le support présentent chacun un orifice pour le passage des moyens de fixation a également déjà été décrit par la demanderesse dans sa demande de brevet publiée sous le numéro FR 2 884 911.

Ces deux dispositifs de l'art antérieur présentent l'avantage d'offrir une solution peu coûteuse, facile à mettre en place et ne nécessitant pratiquement aucun savoir faire lors de leur utilisation contrairement à d'autres dispositifs tels que les témoins en plâtre, les règles optiques, les dilatomètres à palpeurs ou les jauges de contraintes. Cependant, un inconvénient de ces deux dispositifs est qu'ils ne peuvent pas être utilisés pour mesurer des variations de longueur de fissures évoluant selon des modes combinés. En effet, étant donné que la réglette coulisse dans le support selon une direction de mesure déterminée, toute évolution de la fissure ayant une composante dans un plan orthogonal à la direction de mesure provoque des contraintes sur le dispositif de mesure. Dans le meilleur des cas, ces contraintes induisent une déformation plastique du dispositif et par conséquent une incertitude sur la fiabilité des valeurs de mesure du dispositif. Dans le pire des cas, ces contraintes induisent la perte d'intégrité du dispositif de mesure qui devient alors inutilisable. Un autre inconvénient de ces deux dispositifs de l'art antérieur est qu'il peut être compliqué de les installer pour mesurer l'évolution d'une fissure se trouvant dans une cueillie, c'est à dire entre deux pans de murs, ou entre un pan de mur et un plafond ou encore entre un pan de mur et un plancher. En effet, dans ce cas, une pièce supplémentaire telle une cornière, éventuellement fabriquée sur mesure, doit être utilisée avec le dispositif et les moyens de fixation.

Le document GB 2 110 372 publié le 15 Juin 1983 décrit un dispositif pour surveiller l'évolution de fissures dans des bâtiments. Ce dispositif permet notamment de surveiller le glissement d'une fissure.

Le document DE 41 29 032 publié le 24 Décembre décrit l'ancrage en maçonnerie de deux éléments qui sont reliés ensemble. Un des éléments coulisse dans un guide transversal relié à l'autre élément.

Le document DE 94 00 755 publié le 10 Mars 1994 décrit aussi un dispositif pour mesurer les fissures dans un bâtiment, ce dispositif comporte des maques de mesures qui se chevauchent mutuellement et qui coopère avec un support de type charnière.

Le document FR 2 784 178 publié le 27 Avril 2000, décrit un dispositif de mesure de l'évolution d'une fissure. Ce dispositif divulgue une réglette comportant un vernier pouvant coulisser dans un support comportant des graduations.

Le document WO2009/028971 publié le 5 Mars 2009, décrit un dispositif de mesure de la largeur de fissures. Ce dispositif comporte deux plaques superposées l'une sur l'autre, et portant des trous de fixation.

### 3. Objectifs de l'invention

L'invention a pour objectif de pallier au moins un des inconvénients ci-dessus énoncés.

Plus précisément un objectif de l'invention est de proposer un dispositif de mesure unidirectionnelle de la variation de longueur entre un point A et un point B d'au moins une surface qui soit fiable et qui reste utilisable malgré une variation de position des points A et B dans une direction orthogonale à la direction de mesure.

Un autre objectif de l'invention est de proposer un dispositif de mesure unidirectionnelle de la variation de longueur entre un point A et un point B d'au moins une surface qui soit fiable et qui reste utilisable quelque soit la variation de position desdits points A et B.

Un autre objectif de l'invention est de proposer un dispositif de mesure unidirectionnelle de la variation de longueur entre un point A et un point B d'au moins une surface qui soit peu coûteux, pratique et facile à installer par quiconque.

Un autre objectif de l'invention est, au moins selon un mode de réalisation, de proposer un dispositif de mesure unidirectionnelle de la variation de longueur entre un point A et un point B qui puisse être fixé à toutes les surfaces couramment rencontrées dans le domaine du bâtiment.

### 4. Exposé de l'invention

L'invention concerne un dispositif pour mesurer la variation de longueur entre un point A et un point B d'au moins une surface selon une direction de mesure. On entend par « surface » la partie externe d'un matériau, le matériau pouvant être apte à se déformer plastiquement ou apte à se déformer élastiquement ou apte à la propagation de fissures. Dans le domaine du bâtiment ladite au moins une surface est généralement un pan de mur, un plafond ou un plancher, qui sont formés de matériaux peu déformables plastiquement ou élastiquement et dans lesquels peuvent se propager des fissures. Le dispositif selon l'invention comporte un premier élément de mesure destiné à être fixé au point A et un deuxième élément de mesure, chacun possédant des moyens de mesure du déplacement relatif en translation selon ladite direction de mesure dudit premier élément de mesure par rapport audit deuxième élément de mesure. Le dispositif comporte en outre un élément de retenue destiné à être fixé au point B et coopérant avec le deuxième élément de mesure par un élément de liaison, ledit élément de liaison comportant un pion coulissant dans une lumière ayant deux flancs parallèles s'étendant dans une direction orthogonale à ladite direction de mesure. On entend par « lumière » tout orifice ménagé dans une pièce afin d'y permettre le passage d'une autre pièce. La lumière selon l'invention permet le passage du pion. L'écartement entre les deux flancs parallèles s'étendant dans une direction orthogonale à ladite direction de mesure définit la « largeur de la lumière ». Selon une caractéristique préférentielle de l'invention, la lumière a une forme oblongue ou rectangulaire.

Le pion selon l'invention peut être de différentes formes dans la mesure où l'une de ces formes est adaptée pour permettre un coulissement du pion au travers de ladite lumière selon une direction orthogonale à la direction de mesure. Selon une caractéristique préférentielle de l'invention le pion est un cylindre ou un parallélépipède rectangle.

L'élément de liaison comportant un pion coulissant dans une lumière ayant des flancs parallèles s'étendant dans une direction orthogonale à ladite direction de mesure a un degré de liberté nul en translation selon ladite direction de mesure. Selon une caractéristique préférentielle de l'invention, l'élément de liaison comporte un pion de forme cylindrique coulissant dans une lumière oblongue, le diamètre de section du pion étant sensiblement égal mais inférieur à la largeur de la lumière. Selon une autre caractéristique préférentielle de l'invention, l'élément de liaison comporte un pion de forme parallélépipédique rectangle coulissant dans une lumière rectangulaire, la largeur de section du pion étant sensiblement égale mais inférieure à la largeur de la lumière. Au sens de l'invention, « sensiblement égal » peut être interprété par l'homme de l'art comme étant une différence d'ordre micrométrique afin de permettre un coulissement du pion au travers de la lumière selon une direction orthogonale à la direction de mesure mais ne laissant aucun jeu entre le pion et la lumière selon la direction de mesure.

Selon une caractéristique préférentielle de l'invention la lumière est disposée dans l'épaisseur du deuxième élément de mesure et le pion est disposé sur ledit élément de retenue. Ceci a pour avantage de permettre une adaptation facile des dispositifs existants tels que ceux décrits dans FR 2 274 021 et FR 2 884 911 en ménageant une lumière, par exemple par perçage, dans un des deux éléments de mesure.

Selon l'invention, le pion est surmonté d'un taquet. Le taquet a une longueur dans ladite direction de mesure de dimension supérieure à la largeur dans ladite direction de mesure de ladite lumière. Il permet de limiter l'amplitude du coulissement du pion au travers de la lumière en formant butée. Le taquet a, de manière préférée, une forme adaptée pour passer à travers ladite lumière selon au moins une orientation. Ceci a pour avantage de rendre amovible l'élément de liaison selon la présente invention. Selon un mode de réalisation particulier, le taquet est une sphère de diamètre sensiblement égal mais supérieur à la largeur de ladite lumière : il ne peut alors passer à travers ladite lumière qu'en y étant introduit ou en y étant retiré par forçage.

Selon une autre caractéristique préférentielle de l'invention, l'élément de retenue comporte au moins une rainure permettant un pliage dudit élément de retenue. L'élément de retenue peut alors être plié en fonction du besoin pour permettre de fixer le dispositif selon l'invention à la plupart des surfaces couramment rencontrées dans le domaine du bâtiment, sans avoir recours à une pièce supplémentaire, telle une cornière. L'élément de retenue peut alors être plié en fonction du besoin pour permettre de fixer le dispositif selon l'invention dans une cueillie. L'élément de retenue est fabriqué de manière avantageuse dans un polymère ayant des propriétés plastiques tel qu'un polypropylène ou un polyamide. Tout autre polymère utilisé de manière usuelle par l'homme de l'art pour ses propriétés plastiques peut également être utilisé.

Selon l'invention, l'un desdits premier et deuxième éléments de mesure est une réglette coulissant dans un support, ledit support étant l'autre desdits premier et deuxième éléments de mesure. Lesdits moyens de mesure permettent de faire des mesures avec une précision donnée, en centimètre, en millimètre, en dixième de millimètres ou en tout autre unité de longueur. Lesdits moyens de mesure peuvent être constitués par des graduations portées sur ledit support selon la direction de mesure, en regard desquelles est placé un vernier disposé sur ladite réglette, tel que décrit dans la demande FR 2 274 021 déposée par la demanderesse. Alternativement, lesdits moyens de mesure sont constitués par un ensemble de lignes de graduations portées sur la réglette selon la direction de mesure et d'un ensemble de lignes de fenêtres de lecture portées sur le support, tel que décrit dans la demande FR 2 962 211 déposée par la demanderesse. Alternativement, lesdits moyens de mesure sont constitués par des graduations en cadran disposées sur le support, une aiguille et des moyens de conversion du mouvement de translation de la réglette en mouvement de rotation de l'aiguille, ladite aiguille étant entrainée en rotation par les moyens de conversion du mouvement de translation de la réglette en mouvement de rotation de l'aiguille. De tels moyens de mesure ont été décrits en particulier dans la demande FR 2 665 527 déposée par la demanderesse.

Selon une autre caractéristique préférentielle de l'invention, ledit premier élément de mesure et/ou ledit deuxième élément de mesure comporte(nt) un tableau réservé à l'inscription des mesures de relevé.

Selon une autre caractéristique préférentielle de l'invention, le premier élément de mesure et/ou l'élément de retenue comporte(nt) au moins un orifice pour le passage de moyens d'ancrage, tel des clous ou des vis associés ou non à des chevilles.

L'invention concerne également un kit pour la mesure unidirectionnelle de la variation de longueur entre un point A et un point B d'au moins une surface selon une direction de mesure, ce kit comportant un dispositif pour la mesure unidirectionnelle de la variation de longueur entre un point A et un point B d'au moins une surface selon une direction de mesure et des moyens de fixation permettant de fixer le dispositif auxdits points A et B.

Les moyens de fixation peuvent comprendre des adhésifs. Les adhésifs sont avantageusement choisis en fonction de leur propriété de faible fluage, malgré des contraintes tangentielles importantes, afin de ne pas fausser la fiabilité des mesures. Les adhésifs peuvent notamment être un élément auto-adhésif double face ou une colle. Alternativement, les moyens de fixation peuvent comprendre des moyens d'ancrage dans ladite au moins une surface. Les moyens d'ancrage sont avantageusement choisis pour empêcher toute rotation du premier élément de mesure fixé au point A et de l'élément de retenue fixé au point B.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
La figure 1 représente un premier élément de mesure et un deuxième élément de mesure selon l'invention ;
La figure 2A est une vue en perspective d'un élément de retenue selon l'invention.
La figure 2B est une coupe en vue de profil de l'élément de retenue de la figure 2A ;
La figure 3A représente un dispositif comprenant le premier élément de mesure et le deuxième élément de mesure de la figure 1 et l'élément de retenue de la figure 2A, fixé en un point A et un point B d'une surface de part et d'autre d'une fissure ;
La figure 3B représente l'élément de liaison du dispositif de la figure 3A.

### 6. Description d'un mode détaillé de réalisation de l'invention

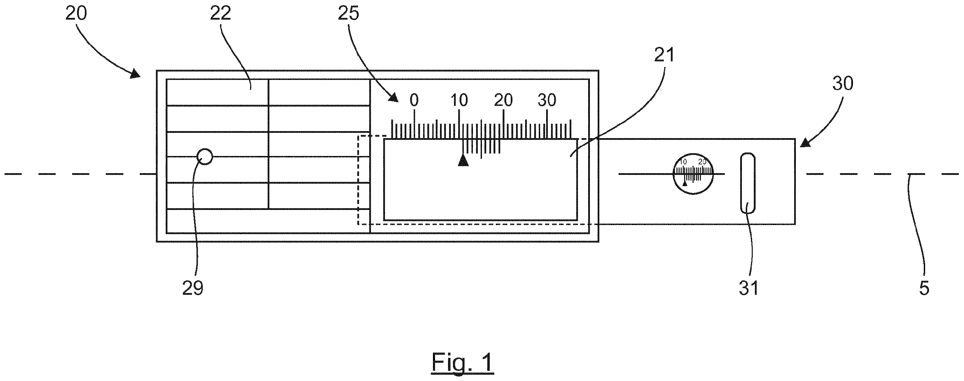

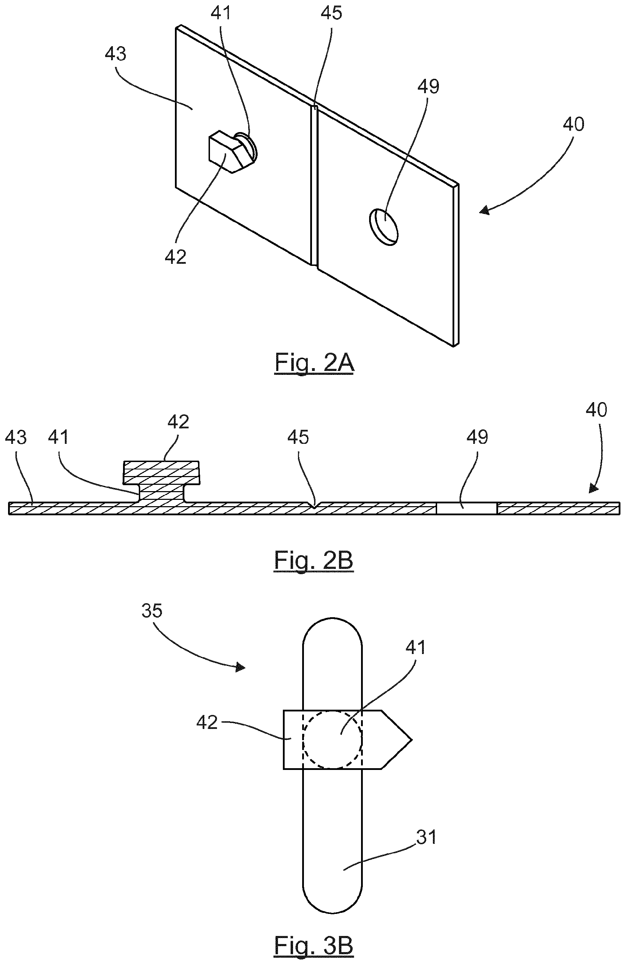

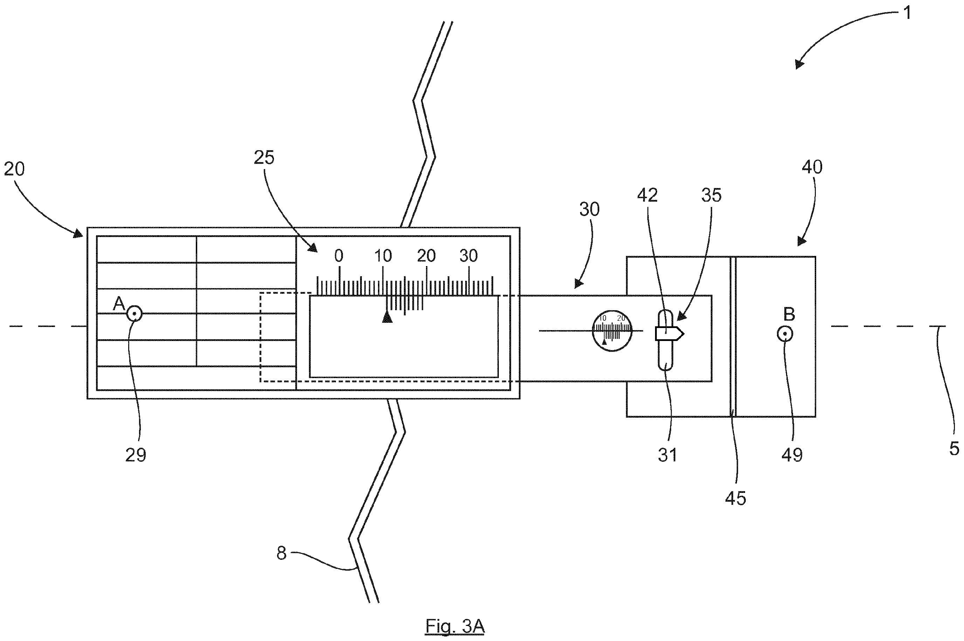

En référence aux figures 1, 2A, 2B, 3A et 3B, le dispositif 1 comprend un premier élément de mesure 20, un deuxième élément de mesure 30 et un élément de retenue 40. Il est fixé en un point A et un point B d'une surface de part et d'autre d'une fissure 8 et permet de mesurer la variation de longueur entre le point A et le point B selon une direction de mesure 5. Le dispositif 1 peut être fixé sur un mur, un plafond ou un plancher ou dans une cueillie formée par l'intersection de deux pans de mur, l'intersection d'un plafond et d'un pan de mur ou l'intersection d'un plancher et d'un pan de mur.

Le premier élément de mesure 20 est un support comportant des graduations avec une précision au millimètre selon la direction de mesure 5, une fenêtre de lecture 21 et un tableau 22. Il comporte également au moins un orifice 29 permettant le passage d'une vis, par exemple, pour sa fixation au point A. Il peut notamment comporter deux orifices 29 permettant le passage de vis, la fixation en deux points distincts du support empêchant tout mouvement de rotation du support.

Le deuxième élément de mesure 30 est une réglette comportant un vernier avec une précision au dixième de millimètre et une lumière 31. La lumière 31 est un trou oblong allongé dans une direction orthogonale à la direction de mesure 5. Le trou oblong 31 peut par exemple être obtenu par un perçage puis un déplacement dans une direction perpendiculaire à la direction de mesure 5 d'une fraise dans l'épaisseur de la réglette 30.

Les graduations du support 20 en regard du vernier de la réglette 30 forment des moyens de mesure 25 qui permettent une lecture facile avec une précision au dixième de millimètre, fiable et sans risque d'erreur de la mesure du déplacement relatif en translation de la réglette 30 par rapport au support 20.

Le tableau 22 sur la réglette 30 permet d'inscrire différentes données comme les mesures faites au cours du temps ou les observations générales sur l'évolution de la fissure 8.

Le support 20 et la réglette 30 peuvent être fabriqués à l'aide de tout matériau suffisamment rigide et résistant à des variations d'humidité et/ou de température. En particulier le matériau doit présenter un faible coefficient de dilatation linéaire. Le matériau peut être par exemple du PVC extrudé ou du polycarbonate.

L'élément de retenue 40 peut être fabriqué notamment par un procédé de moulage par injection de matériau plastique. Le matériau plastique utilisé est un polypropylène, un polyamide ou tout autre polymère utilisé de manière usuelle pour ses propriétés plastiques par l'homme de l'art.

L'élément de retenue 40 comporte une base 43 sur laquelle est disposée un plot 41, lui-même surmonté d'un taquet 42. Il comporte également au moins un orifice 49 permettant le passage d'une vis, par exemple, pour sa fixation au point B. Il peut notamment comporter deux orifices 49 permettant le passage de vis, la fixation en deux points distincts de l'élément de retenue empêchant tout mouvement de rotation du support. Ledit au moins un orifice 49 peut être prévu par le moule d'injection ou s'il n'est pas prévu par le moule d'injection être percé dans la pièce injectée.

Le plot 41 est un cylindre droit dont la base a un diamètre sensiblement égal mais inférieur à la largeur du trou oblong 31 et dont la hauteur est supérieure à l'épaisseur de la réglette 30. Un élément de liaison 35 est formé par le plot 41 coulissant dans le trou oblong 31 uniquement selon une direction orthogonale à la direction de mesure 5. L'élément de liaison 35 permet de réaliser une mesure fiable et sans risque d'erreur de la variation de longueur entre le point A et le point B selon la direction de mesure 5 même dans le cas où A et B ne sont plus alignés selon la direction de mesure 5. L'élément de liaison 35 permet également d'assurer l'intégrité du dispositif 1. Le taquet 42 est un parallélépipède rectangle ayant une largeur inférieure au diamètre du trou oblong 31 et une longueur strictement supérieure à la largeur du trou oblong 31. Il a de plus une face doublement bizeautée. Sa forme particulière permet de rendre l'élément de liaison 35 facilement amovible. En effet, selon une première orientation de l'élément de retenue 40, le taquet 42 peut passer au travers de la lumière 31. Selon d'autres orientations de l'élément de retenue 40, notamment par rotation de 90° par rapport à l'axe de révolution du plot 41, le taquet 42 forme au contraire une butée.

L'élément de retenue 40 comporte en outre une rainure 45 disposée sur la base 43 entre le plot 41 et l'orifice 49. La rainure 45 peut être prévue par le moule d'injection ou si elle n'est pas prévue par le moule d'injection être obtenue par des techniques usuelles d'enlèvement de matière ou de poinçonnage sur la pièce injectée. L'élément de retenue 40 peut alors être plié au niveau de la rainure en fonction du besoin pour permettre de fixer le dispositif 1 aux points A et B.

## Revendications

1. Dispositif (1) pour mesurer la variation de longueur entre un point A et un point B d'au moins une surface selon une direction de mesure (5), comportant un premier élément de mesure (20) destiné à être fixé audit point A et un deuxième élément de mesure (30), ledit premier élément de mesure (20) et ledit deuxième élément de mesure (30) possédant des moyens de mesure (25) du déplacement relatif en translation selon ladite direction de mesure (5) dudit premier élément de mesure (20) par rapport audit deuxième élément de mesure (30),
l'un desdits premier (20) et deuxième (30) éléments de mesure étant une réglette coulissant dans un support, ledit support étant l'autre desdits premier (20) et deuxième (30) éléments de mesure,
**caractérisé en ce que** ledit dispositif (1) comporte en outre un élément de retenue (40) destiné à être fixé audit point B et coopérant avec ledit deuxième élément de mesure (30) par un élément de liaison (35), ledit élément de liaison (35) comportant un pion (41) coulissant dans une lumière (31) ayant deux flancs parallèles s'étendant dans une direction orthogonale à ladite direction de mesure (5),
ledit pion (41) étant surmonté d'un taquet (42) permettant de limiter l'amplitude de coulissement dudit pion (41) au travers de ladite lumière (31) en formant butée, ledit taquet (42) ayant une longueur dans ladite direction de mesure (5) de dimension supérieure à la largeur dans ladite direction de mesure (5) de ladite lumière (31).

2. Dispositif (1) selon la revendication 1 **caractérisé en ce que** ladite lumière (31) a une forme oblongue ou rectangulaire.

3. Dispositif (1) selon l'une quelconque des revendications précédentes, **caractérisé en ce que** ledit taquet (42) a une forme adaptée pour passer à travers ladite lumière (31) selon au moins une orientation.

4. Dispositif (1) selon l'une quelconque des revendications précédentes, **caractérisé en ce que** ledit taquet (42) est une sphère de diamètre sensiblement égal mais supérieur à la largeur de ladite lumière (31).

5. Dispositif (1) selon l'une quelconque des revendications précédentes, **caractérisé en ce que** ladite lumière (31) est disposée dans l'épaisseur dudit deuxième élément de mesure (30) et ledit pion (41) est disposé sur ledit élément de retenue (40).

6. Dispositif (1) selon l'une quelconque des revendications précédentes, **caractérisé en ce que** ledit élément de retenue (40) comporte au moins une rainure (45) permettant un pliage dudit élément de retenue (40).

7. Dispositif (1) selon l'une quelconque des revendications précédentes, **caractérisé en ce que** ledit premier élément de mesure (20) et/ou ledit deuxième élément de mesure (30) comporte(nt) un tableau (22) réservé à l'inscription des mesures de relevé.

8. Dispositif (1) selon l'une quelconque des revendications précédentes, **caractérisé en ce que** ledit premier élément de mesure (20) et/ou ledit élément de retenue (40) comporte(nt) au moins un orifice (29, 49) pour le passage de moyens d'ancrage tels que des vis ou des clous associés ou non à des chevilles.

9. Kit pour la mesure unidirectionnelle de l'évolution d'une fissure sur au moins une surface **caractérisé en ce qu'**il comporte au moins :
- un dispositif (1) selon l'une quelconque des revendications précédentes,
- des moyens de fixation choisis parmi des adhésifs ou des moyens d'ancrage permettant de fixer ledit dispositif (1) auxdits points A et B.

## Patentansprüche

1. Vorrichtung (1) zum Messen der Längenänderung zwischen einem Punkt A und einem Punkt B mindestens einer Fläche in einer Messrichtung (5), umfassend ein erstes Messelement (20), das dazu bestimmt ist, am Punkt A befestigt zu sein, und ein zweites Messelement (30), wobei das erste Messelement (20) und das zweite Messelement (30) Mittel (25) zum Messen der relativen Translationsbewegung in Messrichtung (5) des ersten Messelements (20) in Bezug zum zweiten Messelement (30) umfassen,
wobei eines der ersten (20) und zweiten (30) Messelemente ein in einem Träger gleitendes Lineal ist, wobei der Träger das andere der ersten (20) und zweiten (30) Messelemente ist,
**dadurch gekennzeichnet, dass** die Vorrichtung (1) ferner ein Halteelement (40) umfasst, das dazu bestimmt ist, am Punkt B befestigt zu sein, und mit dem zweiten Messelement (30) durch ein Verbindungselement (35) zusammenwirkt, wobei das Verbindungselement (35) einen Bolzen (41) umfasst, der in einer Öffnung (31) gleitet, mit zwei parallelen Seiten, die sich in eine Richtung orthogonal zur Messrichtung (5) erstrecken,
wobei der Bolzen (41) über einer Nase (42) montiert ist, die es ermöglicht, die Gleitamplitude des Bolzens (41) durch die Öffnung (31) zu begrenzen, wobei sie einen Anschlag bildet, wobei die Nase (42) eine Länge in Messrichtung (5) von größerer Abmessung als die Breite in Messrichtung (5) der Öffnung (31) hat.

2. Vorrichtung (1) nach Anspruch 1, **dadurch gekennzeichnet, dass** die Öffnung (31) eine längliche oder rechteckige Form hat.

3. Vorrichtung (1) nach einem der vorhergehenden Ansprüche, **dadurch gekennzeichnet, dass** die Nase (42) eine Form hat, die dazu angepasst ist, durch die Öffnung (31) gemäß mindestens einer Ausrichtung hindurchzugehen.

4. Vorrichtung (1) nach einem der vorhergehenden Ansprüche, **dadurch gekennzeichnet, dass** die Nase (42) eine Kugel mit einem Durchmesser, der im Wesentlichen gleich, aber größer als die Breite der Öffnung (31) ist.

5. Vorrichtung (1) nach einem der vorhergehenden Ansprüche, **dadurch gekennzeichnet, dass** die Öffnung (31) innerhalb der Dicke des zweiten Messelements (30) angeordnet ist, und der Bolzen (41) auf dem Halteelement (40) angeordnet ist.

6. Vorrichtung (1) nach einem der vorhergehenden Ansprüche, **dadurch gekennzeichnet, dass** das Halteelement (40) mindestens eine Nut (45) umfasst, die ein Umbiegen des Halteelements (40) ermöglicht.

7. Vorrichtung (1) nach einem der vorhergehenden Ansprüche, **dadurch gekennzeichnet, dass** das erste Messelement (20) und/oder das zweite Messelement (30) eine Tabelle (22) umfasst(en), die für die Eintragung der durchgeführten Messungen vorgesehen ist.

8. Vorrichtung (1) nach einem der vorhergehenden Ansprüche, **dadurch gekennzeichnet, dass** das erste Messelement (20) und/oder das Halteelement (40) mindestens eine Öffnung (29, 49) für das Hindurchführen von Verankerungsmitteln umfassen, wie Schrauben oder Nägeln, die Dübeln zugeordnet sind oder nicht.

9. Bausatz zur unidirektionalen Messung der Entwicklung eines Sprungs auf mindestens einer Oberfläche, **dadurch gekennzeichnet, dass** er mindestens umfasst:
- eine Vorrichtung (1) nach einem der vorhergehenden Ansprüche,
- Befestigungsmittel, die unter Haftmitteln oder Verankerungsmitteln ausgewählt sind, die es ermöglichen, die Vorrichtung (1) an den Punkten A und B zu befestigen.

## Claims

1. Device (1) for measuring the change in length between a point A and a point B of at least one surface in one measurement direction (5), comprising a first measurement element (20) intended to be fastened at said point A and a second measurement element (30), said first measurement element (20) and said second measurement element (30) having means (25) of measuring the relative movement in translation in said measurement direction (5) of said first measurement element (20) relative to said second measurement element (30), one of said first measurement element (20) and second measurement element (30) being a ruler sliding in a holder, said holder being the other of said first measurement element (20) and second measurement element (30), **characterised in that** said device (1) further comprises a retaining element (40) intended to be fastened at said point B and engaging with said second measurement element (30) via a connection element (35), said connection element (35) comprising a pin (41) sliding in an opening (31) having two parallel flanks extending in a direction perpendicular to said measurement direction (5), said pin (41) having mounted thereon a tab (42) for limiting the amplitude of sliding of said pin (41) through said opening (31) forming a stop thereof, said tab (42) being of a length in said measurement direction (5) greater than the width in said measurement direction (5) of said opening (31).

2. Device (1) according to Claim 1, **characterised in that** said opening (31) is of an oblong or rectangular shape.

3. Device (1) according to either of the preceding claims, **characterised in that** said tab (42) is of a shape adapted for passing through said opening (31) in at least one orientation.

4. Device (1) according to any one of the preceding claims, **characterised in that** said tab (42) is a sphere of a diameter substantially equal to but greater than the width of said opening (31).

5. Device (1) according to any one of the preceding claims, **characterised in that** said opening (31) is arranged in the body of said second measurement element (30) and said pin (41) is arranged on said retaining element (40).

6. Device (1) according to any one of the preceding claims, **characterised in that** said retaining element (40) comprises at least one groove (45) allowing said retaining element (40) to be bent.

7. Device (1) according to any one of the preceding claims, **characterised in that** said first measurement element (20) and/or said second measurement element (30) comprise(s) a table (22) dedicated to the recorded measurements.

8. Device (1) according to any one of the preceding claims, **characterised in that** said first measurement element (20) and/or said retaining element (40) comprise(s) at least one aperture (29, 49) for the passage of anchoring means such as screws or nails, said screws or nails being associated with wall plugs or not.

9. Kit for unidirectional measurement of the development of a crack on at least one surface, **characterised in that** it comprises at least:
- a device (1) according to any one of the preceding claims,
- fastening means selected from adhesives or anchoring means whereby said device (1) can be fastened at said points A and B.
